# EUROPÄISCHE PATENTSCHRIFT

(11) **EP 2 308 780 B1**
(45) Veröffentlichungstag und Bekanntmachung des Hinweises auf die Patenterteilung: **04.06.2014**
(21) Anmeldenummer: 10009423.4
(22) Anmeldetag: 10.09.2010
(51) Int. Cl.: B65G 47/61, A47G 25/14, A47G 25/32

(54) **Transportbügel und Transportvorrichtung für Transportbügel**
Transport hanger and conveyor device for same
Cintre de voyage et dispositif de transport pour cintre de voyage

(30) Priorität: 06.10.2009 DE 102009048362
(43) Veröffentlichungstag der Anmeldung: 13.04.2011
(73) Patentinhaber: Herbert Kannegiesser GmbH, 32602 Vlotho (DE)
(72) Erfinder: Littmann, Dirk, 32108 Bad Salzuflen (DE); With, Alexander, 86807 Buchloe (DE)
(74) Vertreter: Möller, Friedrich

(56) Entgegenhaltungen:
- EP-A2- 1 044 641
- FR-A- 420 797
- FR-A- 1 452 028
- US-A- 2 164 420

## Beschreibung

Die Erfindung betrifft einen Transportbügel gemäß dem Oberbegriff des Anspruchs 1 wie er aus der EP-A-1044641 bekannt ist. Des Weiteren betrifft die Erfindung eine Transportvorrichtung gemäß dem Oberbegriff des Anspruchs 10.

Bekleidungsstücke werden durch Wäschereien und Konfektionsbetriebe an Transportbügeln hängend transportiert. Der Weitertransport der Transportbügel mit darauf hängenden Bekleidungsstücken, aber auch leerer Transportbügel, erfolgt durch eine Transportvorrichtung. Diese verfügt über mindestens eine Schiene, auf der die Transportbügel an ihren Bügelhaken hängend entlanggleiten können. Auf Förderstrecken mit abwärtsgeneigten Schienen gleiten die Transportbügel selbsttätig (durch Schwerkraft) entlang. Auf Förderstrecken mit horizontalen oder ansteigenden Schienen werden die Transportbügel von an umlaufenden angetriebenen Fördersträngen befestigten Mitnehmern auf den Schienen entlanggeschoben.

Bei bekannten Transportbügeln weisen die Hakenenden der üblicherweise einen halbkreisförmigen Bogen aufweisenden Bügelhaken eine rechtwinklig verlaufende, ebene Stirnfläche auf. Es hat sich gezeigt, dass bei solchen geraden Hakenenden die Bügelhaken der Transportbügel beim Übergeben an die Transportvorrichtung nicht auf die Schiene rutschen, sondern mit dem Hakenende auf der Oberseite der Schiene hängen bleiben. Die Transportbügel können dann von der Schiene herunterfallen, was bei beladenen Transportbügeln zur Beschädigung oder Verschmutzung der daran hängenden Bekleidungsstücke führt. Außerdem können mit den Hakenenden auf der Schiene hängen bleibende Transportbügel sich teilweise über den Bügelhaken eines vorauslaufenden Transportbügels legen, was zu einer Kreuzbildung der Bügelhaken und ein daraus resultierendes Verhaken der Transportbügel führt. Solche verhakten Transportbügel lassen sich am Ende der Schiene nicht mehr vereinzeln.

Der Erfindung liegt nun die Aufgabe zugrunde, einen Transportbügel und eine Transportvorrichtung für Transportbügel zu schaffen, welche ein zuverlässiges Übergeben der Transportbügel mit den Bügelhaken an eine Schiene gewährleisten und eine Kreuzbildung der Bügelhaken vermeiden.

Ein Transportbügel zur Lösung der genannten Aufgabe weist die Merkmale des Anspruchs 1 auf. Demnach ist vorgesehen, das Hakenende des Bügelhakens mit einer teilweise abgeschrägten Stirnfläche zu versehen. Der abgeschrägte Teil der Stirnfläche verläuft dann nicht mehr quer, also unter 90° zur Mittelachse, sondern unter einem anderen Winkel. Durch die teilweise schräge Stirnfläche gleitet das Hakenende unter allen Umständen von einer zum Weitertransport des Transportbügels dienenden Schiene ab, wodurch sichergestellt ist, dass der bogenförmige Bügelhaken stets auf der Schiene hängt und nicht das Hakenende des Bügelarms auf der Schiene hängenbleibt.

Erfindungsgemäß ist nur ein Teil des Stirnfläche bezogen auf eine die Mittellinie des Bügelhakens rechtwinklig schneidende gedachte Stirnfläche abgeschrägt. Dadurch entsteht eine mindestens teilweise "schiefe" Stirnfläche des Hakenendes, die das Heruntergleiten desselben von der Schiene begünstigt, wodurch der Bügelhaken immer auf die Schiene rutscht.

Eine bevorzugte Ausgestaltung der Erfindung sieht es vor, dass die Stirnfläche in einer quer zur Transportrichtung des Transportbügels verlaufenden Richtung abgeschrägt ist. Dadurch wird der üblicherweise quer zur Transportrichtung ausgerichtete Transportbügel beim Aufhängen auf die Schiene quer zur Schiene bewegt, wodurch der Transportbügel zuverlässig mit dem Bügelhaken ganz auf die Schiene gelangt.

Bei einer bevorzugten Weiterbildung des Transportbügels ist es vorgesehen, dass die Stirnfläche in Richtung zur Mitte des bogenförmigen Hakenteils abgeschrägt ist, wodurch das Hakenende infolge der abgeschrägten Stirnfläche nach oben hin, nämlich zum auf der Schiene anliegenden Mittelteil des Bügelhakens, ansteigt. Die schräge Stirnfläche verläuft also in der Richtung, in der das Hakenende sich quer über die Schiene bewegen muss, damit der Bügelhaken über die Schiene rutschen kann.

Bei der Erfindung ist die gedachte rechtwinklige Stirnfläche des Hakenendes nur teilweise abgeschrägt, vorzugsweise um mehr als die Hälfte. Dadurch entsteht keine scharfe Kante beim Übergang der Stirnfläche zur Außenseite des Bügelhakens. Erfindungsgemäß liegt derjenige Teil des Hakenendes, der nicht abgeschrägt ist, auf der rechtwinkligen Stirnfläche des Hakenendes. Dadurch ist die Abschrägung leichter herstellbar, weil nur noch ein Teil der Stirnfläche abgeschrägt werden muss.

Bevorzugt ist es vorgesehen, den nicht abgeschrägten Bereich der Stirnfläche des Hakenendes einem außenliegenden Bereich des Hakenendes zuzuordnen. Dieser Bereich kommt beim Zuführen der Transportbügel zur Schiene als erstes zur Anlage auf der Schiene. Dadurch, dass dieser Bereich nicht abgeschrägt ist, besteht keine scharfe Kante an der Stirnfläche des Bügelhakens, die die Schiene beim quer zur Transportrichtung erfolgenden Abrutschen des Bügelendes von der Schiene beschädigen könnte.

Bei einem bevorzugt ausgestalteten Transportbügel ist der Bügelhaken aus einem Draht mit einem insbesondere zylindrischen Querschnitt gebildet. Der Draht kann aber auch andere Querschnitte aufweisen, beispielsweise elliptisch, viereckig oder als Sechskant. Aus einem solchen Draht lässt sich der Bügelhaken durch einfaches Biegen leicht herstellen. Der Draht kann auch leicht angeschrägt werden.

Gemäß einer weiteren bevorzugten Ausgestaltung der Erfindung weist der Bügelhaken ein mit dem Hakenteil auf der dem Hakenende gegenüberliegenden Seite zusammenhängendes Stegteil auf, das gekröpft ausgebildet ist. Dadurch liegt der Mittelpunkt des vorzugsweise halbkreisförmig gebogenen Bügelhakens senkrecht über dem Schwerpunkt des Transportbügels. So ist gewährleistet, dass der Transportbügel gerade unter der Schiene hängt und es wird insbesondere erreicht, dass das mindestens teilweise abgeschrägte Hakenende des Bügelhakens auf der Schiene quer zur Transportrichtung abgleitet, wodurch der Bügelhaken beim Zuführen des Transportbügels zur Transportvorrichtung zuverlässig auf die Schiene rutscht.

Bevorzugt weist das gekröpfte Stegteil zwei Abschnitte auf, und zwar einen oberen mit dem Bügelhaken zusammenhängenden Abschnitt und einen unteren mit dem übrigen Teil des Transportbügels zusammenhängenden Abschnitt. Der gerade untere Abschnitt liegt auf einer Längsmittelachse des Transportbügels, während der obere Abschnitt des Bügelhakens mit Abstand parallel neben der Längsmittelachse des Transportbügels liegt, wobei dieser Abstand bevorzugt dem halben Durchmesser des halbkreisförmig gebogenen Hakenteils entspricht. Hierdurch stört der außermittig versetzte obere Abschnitt des Stegteils nicht, wenn der Bügelhaken auf der Schiene hängt.

Eine Transportvorrichtung zur Lösung der eingangs genannten Aufgabe weist die Merkmale des Anspruchs 10 auf. Dadurch, dass die mindestens eine Schiene einen Querschnitt aufweist, der über eine Schrägfläche verfügt, die mit der Abschrägung am Hakenende des Bügelhakens korrespondiert, entsteht ein flächiger Kontakt zwischen der Schiene und dem Hakenende des Bügelhakens, wodurch der Bügelhaken leicht auf die Schiene rutschen kann. Dadurch wird vermieden, dass das Hakenende des Transportbügels mit einer scharfen Kante auf der Schiene hängenbleibt, wenn der Bügelhaken auf die Schiene rutscht. Somit kann der Transportbügel keine Riefen auf der Schiene hinterlassen und es kann auch zu keiner "Kreuzbildung" der Bügelhaken aufeinanderfolgender Transportbügel kommen.

Bei einer bevorzugten Ausgestaltung der Transportvorrichtung ist es vorgesehen, dass die Schrägfläche zu einer solchen Seite der Schiene hin abfällt, über die das Hakenende beim Aufhängen des Transportbügels auf die Schiene quer zur Transportrichtung über die Schiene herüberrutscht. Dadurch wird ein zuverlässiges Zuführen des Transportbügels zur Schiene der Transportvorrichtung begünstigt.

Die Erfindung sieht eine Ausgestaltung der Transportvorrichtung vor, die Schrägfläche der Schiene und die Abschrägung des Hakenendes des Bügelhakens etwa gleich auszubilden, so dass die Schrägfläche und die Abschrägung des Bügelhakens etwa unter dem gleichen Winkel verlaufen. Dadurch liegt ein flächiger Bereich des Hakenendes auf der Schrägfläche auf, wenn der Transportbügel beim Aufhängen auf die Schiene quer zur Transportrichtung über die Schiene bewegt wird.

Ein bevorzugtes Ausführungsbeispiel der Erfindung wird nachfolgend anhand der Zeichnung näher erläutert. In dieser zeigen:
- Fig. 1: eine Gesamtansicht eines Transportbügels,
- Fig. 2: eine vergrößerte Darstellung eines Bügelhakens des Transportbügels der Fig. 1,
- Fig. 3: eine weiter vergrößerte Einzelheit III aus der Fig. 2, und
- Fig. 4: einen Querschnitt durch die Transportvorrichtung für Transportbügel der Fig. 1 bis 3.

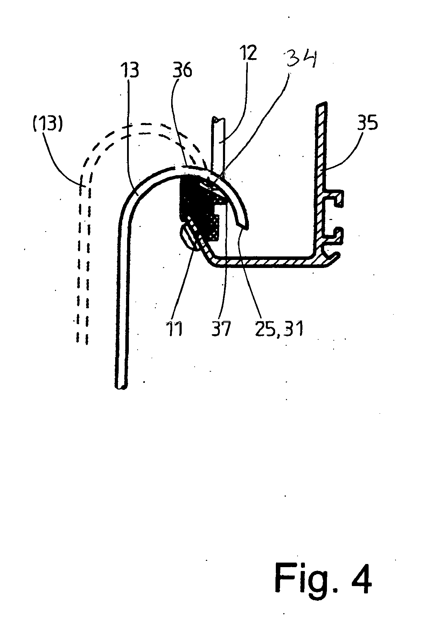

Die Erfindung wird nachfolgend im Zusammenhang mit in einer Wäscherei behandelten Bekleidungsstücken erläutert. Die in den Figuren nicht dargestellten Bekleidungsstücke werden an Transportbügeln 10 hängend von einer nur teilweise in der Fig. 4 dargestellten Transportvorrichtung durch die Wäscherei transportiert.

Die Transportvorrichtung weist eine den gewünschten Transportweg definierende Förderstrecke auf, die von einer oder vorzugsweise mehreren Schienen 11 gebildet wird. Die quer zur Schiene 11 orientierten Transportbügel 10 werden an der jeweiligen Schiene 11 hängend längs derselben in Transportrichtung weitertransportiert. Dieses kann bei abwärts geneigt verlaufenden Schienen 11 ohne einen Antrieb schwerkraftbedingt erfolgen, indem die Transportbügel an der Schiene 11 herunterrutschen. Bei geraden oder ansteigend verlaufenden Schienen 11 werden die Transportbügel 10 von Mitnehmern 12 (Fig. 4) längs der Schiene 11 weitergeschoben. Die Mitnehmer 12 sind an einem umlaufenden Antriebsstrang, beispielsweise einer Förderkette, befestigt. Durch einen geeigneten Antrieb des Förderstrangs werden von diesem die Mitnehmer 12 in Transportrichtung längs der Schiene 11 unter Mitnahme der Transportbügel 11 entlang bewegt.

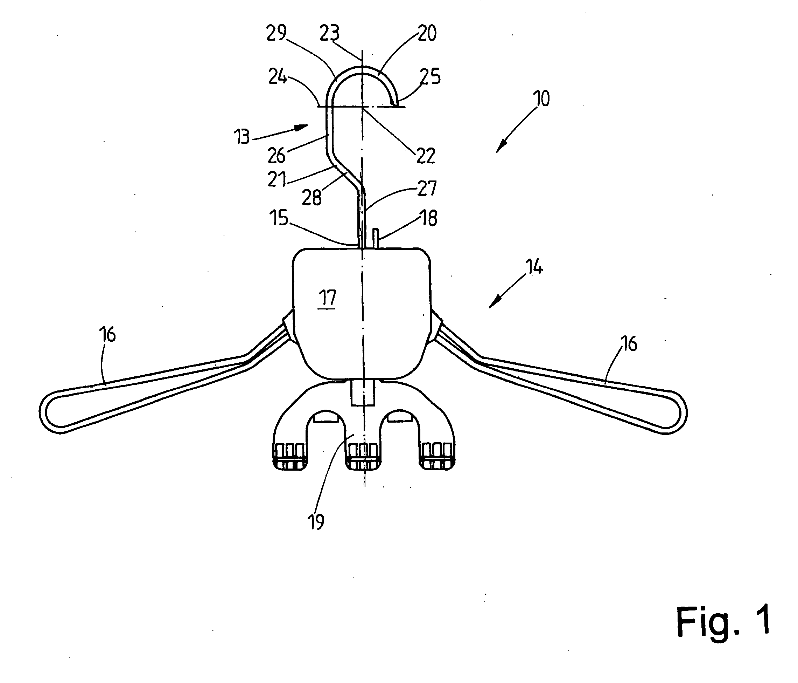

Der erfindungsgemäße Transportbügel 10 ist in den Fig. 1 bis 3 gezeigt. Dieser Transportbügel 10 verfügt über einen Bügelhaken 13 und einen vom Bügelhaken 13 getragenen Bügelkörper 14. Der Bügelkörper 14 ist mit einem unteren Ende 15 des Bügelhakens 13 verbunden.

Der hier gezeigte Bügelkörper 14 verfügt über zwei ein- und ausklappbare Bügelarme 16. In der Fig. 1 ist der Transportbügel 10 mit ausgeklappten Bügelarmen 16 dargestellt. Die Bügelarme 16 sind um horizontale Drehachsen schwenkbar in einem Bügelgehäuse 17 gelagert. Das Bügelgehäuse 17 verfügt über einen Sperrmechanismus, der die Bügelarme 16 in der gezeigten ausgeklappten Stellung arretiert. Durch einen oben aus dem Bügelgehäuse 17 herausragenden Betätigungsstift 18 ist die Arretierung der Bügelarme 16 in der ausgeklappten Stellung lösbar zum selbsttätigen Herunterklappen der Bügelarme 16 in eine eingeklappte Stellung. Die Bügelarme 16 können aber auch fest am Bügelgehäuse 17 gelagert sein. Bei einem solchen Transportbügel sin die Bügelarme 16 nicht einklappbar.

Der gezeigte Transportbügel 10 verfügt unter dem Bügelgehäuse 17 noch über eine Klammer 19. Die Klammer 19 schließt selbsttätig federbetätigt. Geöffnet wird die Klammer 19 durch einen entsprechenden Öffnungsmechanismus im Bügelgehäuse 17, der auch vom Betätigungsstift 18 aktivierbar ist.

Die Bügelarme 16 dienen zum Aufhängen von Hemden, Jacken, Sakkos, Kitteln oder dergleichen am Transportbügel 10. Die Klammer 19 dient zum Festklemmen von zum Beispiel Hosen am Transportbügel 10.

Die Erfindung ist nicht auf den hier gezeigten Transportbügel 10 mit ein- und ausklappbaren Bügelarmen 16 einer Klammer 19 beschränkt. Die Erfindung eignet sich vielmehr für alle Arten von Transportbügeln 10, insbesondere solche, die nur Bügelarme 16 oder nur eine Klammer 19 aufweisen, aber auch solche Transportbügel 10, bei denen mehrere Klammern vorgesehen sind, beispielsweise an den Bügelarmen 16.

In besonderer Weise ist der Bügelhaken 13 des Transportbügels 10 ausgebildet. Dieser verfügt über ein bogenförmiges Hakenteil 20 und ein Stegteil 21, das das Hakenteil 20 mit dem Bügelgehäuse 17 des Bügelkörpers 14 verbindet.

Das Hakenteil 20 ist beim hier gezeigten Transportbügel 10 halbkreisförmig gebogen. Ein Mittelpunkt 22 des halbkreisförmigen Hakenteils 20 liegt auf einer vertikalen Längsmittelachse 23 des Transportbügels 10. Auf einer horizontalen Achse 24 durch den Mittelpunkt 22 liegt ein freies Hakenende 25 des halbkreisförmig gebogenen Hakenteils 20. An der dem Hakenende 25 gegenüberliegenden Seite des bogenförmigen Hakenteils 20 schließt das Stegteil 21 des Bügelhakens 13 an. Das Stegteil 21 und das Hakenteil 20 sind einstückig verbunden zur Bildung des insgesamt einteiligen Bügelhakens 13.

Das Stegteil 21 ist beim gezeigten Transportbügel 10 gekröpft ausgebildet. Dazu verfügt das Stegteil 21 über einen oberen senkrechten Abschnitt 26, einen ebenfalls senkrechten unteren Abschnitt 27 und einen schräg zwischen den geraden Abschnitten 26 und 27 verlaufenden Zwischenabschnitt 28. Der schräge Zwischenabschnitt 28 verläuft vom oberen Abschnitt 26 zum unteren Abschnitt 27 schräg abfallend.

Der gerade untere Abschnitt 27 liegt auf der Längsmittelachse 23 des Transportbügels 10. Der parallel zum unteren Abschnitt 27 verlaufende obere Abschnitt 26 verläuft seitlich neben der Längsmittelachse 23, und zwar mit einem Abstand, der dem halben Durchmesser des halbkreisförmigen Haktenteils 20 entspricht. Auf der dem oberen Abschnitt 26 gegenüberliegenden Seite der Längsmittelachse 23 liegt das Hakenende 25, und zwar etwa auf der horizontalen Achse 14. Infolge der gekröpften Ausbildung des Stegteils 21 liegt der Schwerpunkt des Transportbügels 10 senkrecht unter dem Mittelpunkt 22 des Hakenteils 20 auf der Längsmittelachse 23 des Transportbügels 10 (Fig. 1).

Der gesamte Bügelhaken 13 ist einstückig aus einem entsprechend gebogenen Draht 29 gebildet. Bevorzugt handelt es sich dabei um einen Draht 29 mit einem kreisrunden Querschnitt und einem Durchmesser d. Der Draht 29 kann auch andere Querschnitte aufweisen, beispielsweise ovale oder eckige Querschnitte.

In erfindungsgemäß besonderer Weise ist das Hakenende 25 des halbkreisförmigen Hakenteils 20 ausgebildet, indem das Hakenende 25 im gezeigten Ausführungsbeispiel teilweise abgeschrägt ist, und zwar in einer quer zur Transportrichtung verlaufenden Richtung. Dadurch setzt sich die Stirnfläche des Hakenendes 25 aus zwei Abschnitten zusammen, und zwar eine außenliegende gerade Teilfläche 30 und eine innenliegende schräge Teilfläche 31. Die gerade Teilfläche 30 verläuft senkrecht zur Längsmittelachse 23 und liegt beim hier gezeigten Transportbügel 10 mit dem halbkreisförmigen Hakenteil 20 auf der horizontalen Achse 24 durch den Mittelpunkt 22 des Hakenteils 20. Die gerade Teilfläche 30 liegt somit auf einer gedachten Stirnfläche, die die Mittellinie des Drahts 29 am Hakenende 25 rechtwinklig schneidet. Mit anderen Worten liegt die gerade Teilfläche 30 auf einer quergerichteten Stirnfläche am Hakenende 25.

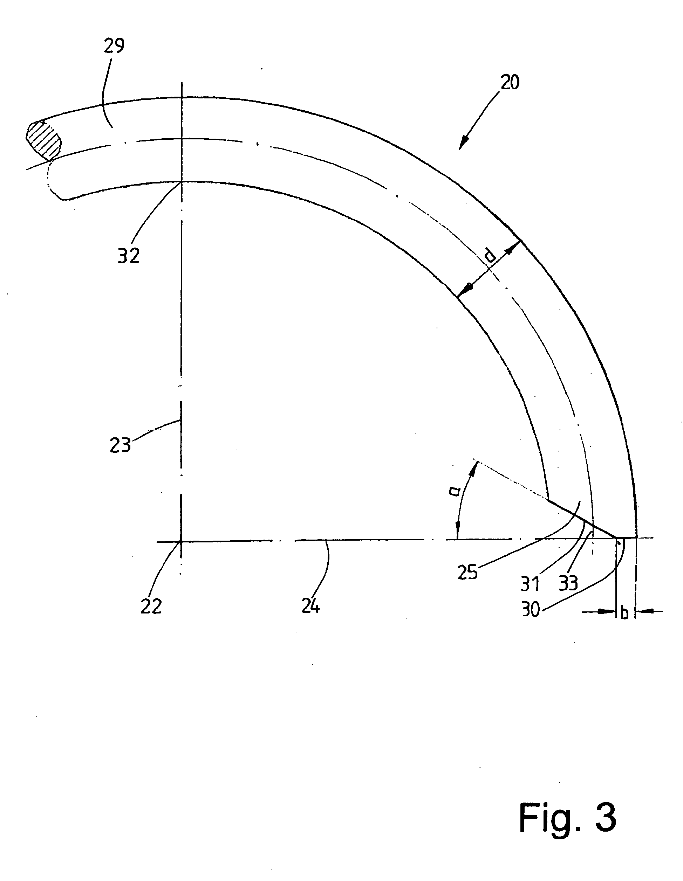

Die schräge Teilfläche 31 ist gegenüber der geraden Teilfläche 30 so abgewinkelt, dass sie gegenüber der geraden Teilfläche 30 unter einem eingeschlossenen Winkel vertäuft, der kleiner ist als 180°. Im gezeigten Ausführungsbeispiel verläuft die schräge Teilfläche 31 unter einem Winkel α zur horizontalen Achse 24, der etwa 30° beträgt, aber auch um 10° größer oder kleiner sein kann. Dieser Winkel α (Fig. 3) ist so gewählt, dass er, also die schräge Teilfläche 31, oberhalb der horizontalen Achse 24 liegt, wodurch das Hakenende 25 in Richtung zur Längsmittelachse 23 nach oben hin, nämlich zur Scheitellinie 32 des halbkreisförmigen Hakenteils 20, schräg ansteigend verläuft. Ausgehend von der geraden Teilfläche 30 an der Außenseite des Hakenendes 25 erstreckt sich somit die schräge Teilfläche 31 hochlaufend in Richtung zum Inneren bzw. zur Mitte des Hakenteils 20.

Die auf der horizontalen Achse 24 liegende äußere, horizontale Teilfläche 30 ist kleiner als die schräge Teilfläche 31. Im gezeigten Ausführungsbeispiel beträgt die Breite b der horizontalen Teilfläche 30 nur etwa ein Viertel des Durchmessers d des Drahts 29 zur Bildung des Bügelhakens 13. Die Breite b der horizontalen Teilfläche 30 kann aber auch größer oder kleiner sein, beispielsweise im Bereich von ¹/₁₀ bis ⁴/₁₀, vorzugsweise ²/₁₀ bis ³/₁₀ des Durchmessers d des Drahts 29 liegen.

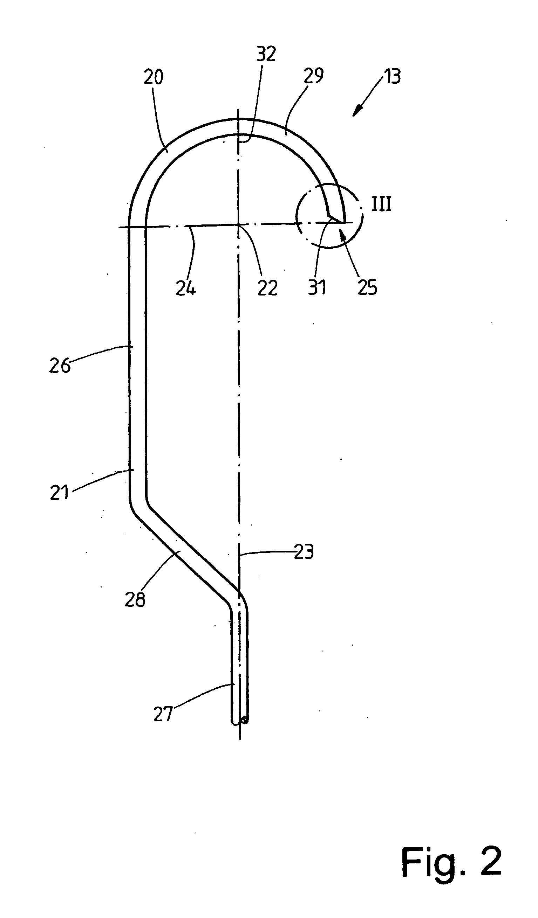

Es ist ein alternatives Ausführungsbeispiel eines Transportbügels 10 denkbar, bei dem die gesamte Stirnfläche des Hakenendes 25 abgeschrägt ist. Das Hakenende 25 verfügt dann nur über eine elliptische schräge Stirnfläche. Die gerade Teilfläche 30 des Ausführungsbeispiels der Fig. 2 und 3 entfällt dann.

Die Schiene 11 der in der Fig. 4 teilweise gezeigten Transportvorrichtung ist erfindungsgemäß an der Oberseite teilweise abgeschrägt zur Bildung einer Schrägfläche 34. Die obenliegende Schrägfläche 34 der Schiene 11 verläuft schräg abwärts gerichtet zu derjenigen Seite, auf der das Hakenende 25 sich bei auf der Schiene 11 aufgehängtem Transportbügel 10 befindet. Im gezeigten Ausführungsbeispiel ist auf dieser Seite die Schiene 11 von einem Tragprofil 35 gehalten. Die Neigung der Schrägfläche 34 ist so gewählt, dass sie mit der Neigung der schrägen Teilfläche 31 am Hakenende 25 des Hakenteils 20 korrespondiert. Bevorzugt entspricht der Winkel der Schrägfläche 34 gegenüber der Horizontalen etwa dem Winkel α, um den die schräge Teilfläche 31 am Hakenende 25 des Transportbügels 10 gegenüber der Horizontalen, nämlich der horizontalen Achse 24, geneigt ist. Auf diese Weise sind die Winkel α der schrägen Teilfläche 31 und der Schrägfläche 34 etwa gleich. Dadurch kommt es zu einer flächigen Auflage der schrägen Teilfläche 31 am Hakenende 25 des Hakenteils 20 des Transportbügels 10 auf der Schrägfläche 34 der Schiene 11. Die Winkel können aber auch um bis zu 10° in jeder Richtung voneinander abweichen.

Wenn zum Einschleusen eines Transportbügels 10 in die Transportvorrichtung das Hakenteil 20 des Transportbügel 10 mit dem Hakenende 25 auf die Schrägfläche 34 der Schiene 11 gelangt, wie es in der Fig. 4 gestrichelt dargestellt ist, kann infolge des vorzugsweise vollflächigen Aufliegens der schrägen Teilfläche 31 des Hakenendes 25 auf der Schrägfläche 34 der Schiene 11 der Transportbügel 10 mit dem Hakenende 25 auf der Schrägfläche 34 entlangrutschen. Nach dem Herunterrutschen des Hakenendes 25 von der Schrägfläche 34 hängt der Transportbügel 10 mit dem halbkreisförmigen Hakenteil 20 etwa mittig auf der Schiene 11. Dann liegt der Transportbügel 10 mit einem mittleren Bereich, der sich links und rechts von der Scheitellinie 30 des gebogenen Hakenteils 20 erstreckt, auf einer horizontalen bzw. leicht gewölbten Gleitfläche 36 auf der Schiene 11 auf. Auf dieser Gleitfläche 36 kann der Transportbügel 10 dann in Transportrichtung auf der Schiene 11 entlangrutschen, und zwar entweder bei geneigten Schienen 11 schwerkraftbedingt oder angetrieben durch den jeweiligen Mitnehmer 12.

Die Gleitfläche 36 ist auf der der Schrägfläche 34 gegenüberliegenden äußeren Seite der Schiene 11, also neben dem höherliegenden Längsrand der Schrägfläche 34, angeordnet, und zwar etwas gegenüber dem höherliegenden Längsrand der Schrägfläche 34. nach oben vorstehend. Dadurch kommt das Hakenteil 20 des Transportbügels 10 im Wesentlichen nur mit der Gleitfläche 36 der Schiene 11 in Kontakt. Nur zum Zwecke der Querführung des bogenförmigen Hakenteils 20 auf der Schiene 11 kommt der tieferliegende Rand 37 auf der der Gleitfläche 36 gegenüberliegenden inneren Seite der Schiene 11 mit dem Hakenteil 20 in Kontakt.

Im gezeigten Ausführungsbeispiel greift der Mitnehmer 12 oberhalb der Schrägfläche 34 hinter das Hakenteil 20, und zwar etwa im Bereich der Scheitellinie 32. Es ist auch denkbar, den Mitnehmer 12 an einer anderen Stelle des Hakenteils 20 angreifen zu lassen, beispielsweise an der äußeren Seite der Schiene 11, von der die Gleitfläche 36 ausgeht.

Der erfindungsgemäße Transportbügel 10 und die Förderungsvorrichtung eignen sich nicht nur zum Transport von Bekleidungsstücken in Wäschereien, sondern auch zum Transport von Bekleidungsstücken in Konfektionsbetrieben und sonstigen Betrieben zur Herstellung, Bearbeitung oder Behandlung von Bekleidungsstücken.

### Bezugszeichenliste:

- 10: Transportbügel
- 11: Schiene
- 12: Mitnehmer
- 13: Bügelhaken
- 14: Bügelkörper
- 15: unteres Ende
- 16: Bügelarm
- 17: Bügelgehäuse
- 18: Betätigungsstift
- 19: Klammer
- 20: Hakenteil
- 21: Stegteil
- 22: Mittelpunkt
- 23: Längsmittelachse
- 24: horizontale Achse
- 25: Hakenende
- 26: oberer Abschnitt
- 27: unterer Abschnitt
- 28: Zwischenabschnitt
- 29: Draht
- 30: gerade Teilfläche
- 31: schräge Teilfläche
- 32: Scheitellinie
- 33: Mittellinie
- 34: Schrägfläche
- 35: Tragprofil

- 36: Gleitfläche
- 37: Rand

## Patentansprüche

1. Transportbügel für Bekleidungsstücke mit einem Bügelhaken (13) und mindestens einem am Bügelhaken (13) angeordneten Bügelkörper (14), an dem ein Bekleidungsstück anhängbar oder aufhängbar ist, wobei der Bügelhaken (13) ein bogenförmiges Hakenteil (20) mit einem freien Hakenende (25) aufweist, **dadurch gekennzeichnet, dass** das Hakenende (25) eine teilweise abgeschrägte Stirnfläche aufweist, deren nicht abgeschrägter Teil rechtwinklig zu einer Mittellinie des Hakenteils (20) am Hakenende (25) verläuft.

2. Transportbügel nach Anspruch 1, **dadurch gekennzeichnet, dass** die Stirnfläche des Hakenendes (25) bezogen auf die die Mittellinie des Hakenteils (20) am Hakenende (25) rechtwinklig schneidende (gedachte) Stirnftäche teilweise abgeschrägt ist, wobei vorzugsweise die abgeschrägte Stirnfläche des Hakenendes (25) unter einem Winkel von 20° bis 40°, insbesondere etwa 30°, gegenüber der (gedachten) rechtwinkligen Stirnfläche verläuft.

3. Transportbügel nach Anspruch 1 oder 2, **dadurch gekennzeichnet, dass** die Stirnfläche teilweise in einer quer zur Transportrichtung verlaufenden Richtung abgeschrägt ist.

4. Transportbügel nach einem der vorhergehenden Ansprüche, **dadurch gekennzeichnet, dass** die Stirnfläche in Richtung zur Mitte des bogenförmigen Hakenteils (20) abgeschrägt ist.

5. Transportbügel nach einem der vorhergehenden Ansprüche, **dadurch gekennzeichnet, dass** die rechtwinklig zu der Mittellinie verlaufende Stirnfläche des Hakenendes (25) um mehr als die Hälfte abgeschrägt ist.

6. Transportbügel nach einem der vorhergehenden Ansprüche, **dadurch gekennzeichnet, dass** der nicht abgeschrägte Bereich der Stirnfläche des Hakenendes (25) von einer Außenseite des Hakenteils (20) und/oder Hakenendes (25) ausgeht.

7. Transportbügel nach einem der vorhergehenden Ansprüche, **dadurch gekennzeichnet, dass** der Bügelhaken (13) aus einem Draht (29) mit einem vorzugsweise zylindrischen Querschnitt gebildet ist, wobei insbesondere vorgesehen ist, dass der abgeschrägte Bereich der Stirnfläche des Hakenendes (25) sich über ⁶/₁₀ bis ⁹/₁₀, vorzugsweise ⁷/₁₀ bis ⁸/₁₀, des Durchmessers des Drahtes (29) zur Bildung des Bügelhakens (13) erstreckt.

8. Transportbügel nach einem der vorhergehenden Ansprüche, **dadurch gekennzeichnet, dass** der Bügelhaken (13) ein mit dem Hakenteil (20) zusammenhängendes Stegteil (21) aufweist, das gekröpft ausgebildet ist.

9. Transportbügel nach Anspruch 8, **dadurch gekennzeichnet, dass** das gekröpfte Stegteil (21) einen mit dem Bügelkörper (14) verbundenen unteren Abschnitt (27) und einen an das Hakenteil (20) angrenzenden oberen Abschnitt (26) aufweist, die durch einen Zwischenabschnitt (28) verbunden sind, wobei der unteren Abschnitt (27) auf einer Längsmittelachse (23) des Bügelhakens (13) liegt und der obere Abschnitt (26) parallel hierzu verläuft, vorzugsweise mit einem Abstand von der Längsmittelachse (23), der dem halben Durchmesser des halbkreisförmig gebogenen Hakenteils (20) entspricht.

10. Transportvorrichtung für Bekleidungsstücke mit mindestens einer Schiene (11) und Bügelhaken (13) aufweisenden Transportbügeln (10) zur hängenden Aufnahme der Beleidungsstücke, wobei die Transportbügel (10) mit ihren Bügelhaken (13) auf der Schiene (11) entlanggleiten, **dadurch gekennzeichnet, dass** die mindestens eine Schiene (11) über einen eine Schrägfläche (34) aufweisenden Querschnitt verfügt, wobei die Richtung und der Winkel der Schrägfläche (34) mit Abschrägungen an Hakenenden (25) der Bügelhaken (13) der Transportbügel (10) korrespondieren, indem die Schrägfläche (34) der Schiene (11) unter einem Winkel verläuft, der etwa dem Winkel der Abschrägungen der Hakenenden (25) der Bügelhaken (13) entspricht.

11. Transportvorrichtung nach Anspruch 10, **dadurch gekennzeichnet, dass** die Schrägfläche (34) der Schiene (11) zu einer solchen Seite eines Randes der Schiene (11) abfällt, zu der die Hakenenden (25) sich beim Aufhängen der Transportbügel (10) auf die Schiene (11) quer zur Transportrichtung herüberbewegen und/oder neben einer höherliegenden Seite der Schrägfläche (34) eine vorzugsweise nach oben vorstehende Gleitfläche (36) angeordnet ist, auf der die Bügelhaken (13) der Transportbügel (10) nach dem Aufhängen der Transportbügel (10) auf die Schiene (11) entlanggleiten.

12. Transportvorrichtung nach Anspruch 10 oder 11, **dadurch gekennzeichnet, dass** die Transportbügel (10) nach einem oder mehreren der Ansprüche 1 bis 9 ausgebildet sind.

## Claims

1. Transporting hanger for items of clothing, having a hanger hook (13) and at least one hanger body (14), which is arranged on the hanger hook (13) and on which an item of clothing can be hung, wherein the hanger hook (13) has an arcuate hook part (20) with a free hook end (25), **characterized in that** the hook end (25) has a partially bevelled end surface, of which the non-bevelled part runs at right angles to a centre line of the hook part (20) at the hook end (25).

2. Transporting hanger according to Claim 1, **characterized in that** the end surface of the hook end (25) is bevelled partially in relation to an (imaginary) end surface which intersects at right angles the centre line of the hook part (20) at the hook end (25), preferably the bevelled end surface of the hook end (25) running at an angle of 20° to 40°, in particular approximately 30°, in relation to the (imaginary) right-angled end surface.

3. Transporting hanger according to Claim 1 or 2, **characterized in that** the end surface is bevelled partially in a direction running transversely to the transporting direction.

4. Transporting hanger according to one of the preceding claims, **characterized in that** the end surface is bevelled in the direction of the centre of the arcuate hook part (20).

5. Transporting hanger according to one of the preceding claims, **characterized in that** that end surface of the hook end (25) which runs at right angles to the centre line is more than half bevelled.

6. Transporting hanger according to one of the preceding claims, **characterized in that** the non-bevelled region of the end surface of the hook end (25) extends from an outer side of the hook part (20) and/or hook end (25).

7. Transporting hanger according to one of the preceding claims, **characterized in that** the hanger hook (13) is formed from a wire (29) with a preferably cylindrical cross section, in particular provision being made for the bevelled region of the end surface of the hook end (25) to extend over 6/10 to 9/10, preferably 7/10 to 8/10, of the diameter of the wire (29) for forming the hanger hook (13).

8. Transporting hanger according to one of the preceding claims, **characterized in that** the hanger hook (13) has a crosspiece part (21) which continues from the hook part (20) and is of angled design.

9. Transporting hanger according to Claim 8, **characterized in that** the angled crosspiece part (21) has a lower portion (27), which is connected to the hanger body (14), and an upper portion (26), which is adjacent to the hook part (20), these two portions being connected by an intermediate portion (28), wherein the lower portion (27) is located on a longitudinal centre axis (23) of the hanger hook (13) and the upper portion (26) runs parallel thereto, preferably at a distance from the longitudinal centre axis (23) which corresponds to half the diameter of the semicircular hook part (20).

10. Transporting apparatus for items of clothing, having at least one rail (11) and having transporting hangers (10), which have hanger hooks (13) and are intended for accommodating items of clothing in a hanging state, wherein the transporting hangers (10) slide along the rail (11) by way of their hanger hooks (13), **characterized in that** the at least one rail (11) has a cross section with a sloping surface (34), wherein the direction and the angle of the sloping surface (34) correspond with bevelled portions at hook ends (25) of the hanger hooks (13) of the transporting hangers (10), the sloping surface (34) of the rail (11) running at an angle which corresponds approximately to the angle of the bevelled portions of the hook ends (25) of the hanger hooks (13).

11. Transporting apparatus according to Claim 10, **characterized in that** the sloping surface (34) of the rail (11) slopes down to such a side of a periphery of the rail (11) to which the hook ends (25) move over, transversely to the transporting direction, when the transporting hangers (10) are hung on the rail (11) and/or a preferably upwardly projecting sliding surface (36) is arranged alongside a relatively high-level side of the sloping surface (34), and the hanger hooks (13) of the transporting hangers (10) slide along the same once the transporting hangers (10) have been hung on the rail (11).

12. Transporting apparatus according to Claim 10 or 11, **characterized in that** the transporting hangers (10) are designed according to one or more of Claims 1 to 9.

## Revendications

1. Cintre de transport pour des vêtements, comprenant un crochet de cintre (13) et au moins un corps de cintre (14) disposé sur le crochet de cintre (13), auquel corps de cintre un vêtement peut être accroché ou suspendu, le crochet de cintre (13) comprenant une partie de crochet arquée (20) pourvue d'une extrémité de crochet libre (25), **caractérisé en ce que** l'extrémité de crochet (25) comprend une surface frontale partiellement chanfreinée dont la partie non chanfreinée s'étend perpendiculairement à une ligne médiane de la partie de crochet (20) au niveau de l'extrémité de crochet (25).

2. Cintre de transport selon la revendication 1, **caractérisé en ce que** la surface frontale de l'extrémité de crochet (25) est partiellement chanfreinée par rapport à la surface frontale (imaginaire) coupant perpendiculairement la ligne médiane de la partie de crochet (20) au niveau de l'extrémité de crochet (25), la surface frontale chanfreinée de l'extrémité de crochet (25) s'étendant de préférence suivant un angle de 20° à 40°, en particulier d'approximativement 30°, par rapport à la surface frontale perpendiculaire (imaginaire).

3. Cintre de transport selon la revendication 1 ou 2, **caractérisé en ce que** la surface frontale est partiellement chanfreinée dans une direction s'étendant transversalement à la direction de transport.

4. Cintre de transport selon l'une quelconque des revendications précédentes, **caractérisé en ce que** la surface frontale est chanfreinée en direction du centre de la partie de crochet arquée (20).

5. Cintre de transport selon l'une quelconque des revendications précédentes, **caractérisé en ce que** la surface frontale de l'extrémité de crochet (25) s'étendant perpendiculairement à la ligne médiane est chanfreinée sur plus de la moitié.

6. Cintre de transport selon l'une quelconque des revendications précédentes, **caractérisé en ce que** la région non chanfreinée de la surface frontale de l'extrémité de crochet (25) part d'un côté extérieur de la partie de crochet (20) et/ou de l'extrémité de crochet (25).

7. Cintre de transport selon l'une quelconque des revendications précédentes, **caractérisé en ce que** le crochet de cintre (13) est formé à partir d'un fil métallique (29) présentant une section transversale de préférence cylindrique, en prévoyant en particulier que la région chanfreinée de la surface frontale de l'extrémité de crochet (25) s'étende sur 6/10 à 9/10, de préférence 7/10 à 8/10, du diamètre du fil métallique (29) pour former le crochet de cintre (13).

8. Cintre de transport selon l'une quelconque des revendications précédentes, **caractérisé en ce que** le crochet de cintre (13) comprend une partie de liaison (21) qui est réalisée de manière coudée et d'un seul tenant avec la partie de crochet (20).

9. Cintre de transport selon la revendication 8, **caractérisé en ce que** la partie de liaison coudée (21) comprend une portion inférieure (27) reliée au corps de cintre (14) et une portion supérieure (26) adjacente à la partie de crochet (20), lesquelles portions sont reliées par une portion intermédiaire (28), la portion inférieure (27) se situant sur un axe médian longitudinal (23) du crochet de cintre (13) et la portion supérieure (26) s'étendant parallèlement à celle-ci, de préférence à une distance de l'axe médian longitudinal (23) qui correspond à la moitié du diamètre de la partie de crochet (20) courbée en forme de demi-cercle.

10. Dispositif de transport pour des vêtements, comprenant au moins un rail (11) et des cintres de transport (10) comprenant des crochets de cintre (13) pour recevoir de manière suspendue les vêtements, les cintres de transport (10) glissant par leurs crochets de cintre (13) sur le rail (11) le long de celui-ci, **caractérisé en ce que** l'au moins un rail (11) possède une section transversale comprenant une surface inclinée (34), la direction et l'angle de la surface inclinée (34) correspondant à des chanfreins aux extrémités de crochet (25) des crochets de cintre (13) des cintres de transport (10), par le fait que la surface inclinée (34) du rail (11) s'étend suivant un angle qui correspond approximativement à l'angle des chanfreins des extrémités de crochet (25) des crochets de cintre (13).

11. Dispositif de transport selon la revendication 10, **caractérisé en ce que** la surface inclinée (34) du rail (11) est descendante en direction d'un côté d'un bord du rail (11) vers lequel les extrémités de crochet (25) se déplacent transversalement à la direction de transport lorsque les cintres de transport (10) sont suspendus sur le rail (11) et/ou une surface de glissement (36) faisant saillie de préférence vers le haut est disposée près d'un côté situé plus haut de la surface inclinée (34), sur laquelle et le long de laquelle surface de glissement glissent les crochets de cintre (13) des cintres de transport (10) après que les cintres de transport (10) ont été suspendus sur le rail (11).

12. Dispositif de transport selon la revendication 10 ou 11, **caractérisé en ce que** les cintres de transport (10) sont réalisés selon l'une quelconque ou plusieurs des revendications 1 à 9.
